(19) Europäisches Patentamt
European Patent Office
Office européen des brevets

(11) EP 2 406 495 B1

(12) **EUROPÄISCHE PATENTSCHRIFT**

(45) Veröffentlichungstag und Bekanntmachung des Hinweises auf die Patenterteilung:
**27.03.2013  Patentblatt 2013/13**

(21) Anmeldenummer: **10706665.6**

(22) Anmeldetag: **05.03.2010**

(51) Int Cl.:
*B01D 63/00* (2006.01)    *B01D 63/08* (2006.01)
*F04B 19/00* (2006.01)    *F04B 53/20* (2006.01)
*B01D 19/00* (2006.01)    *B01D 35/26* (2006.01)
*B01D 61/14* (2006.01)    *F04B 43/04* (2006.01)

(86) Internationale Anmeldenummer:
**PCT/EP2010/052848**

(87) Internationale Veröffentlichungsnummer:
**WO 2010/102961 (16.09.2010 Gazette 2010/37)**

(54) **PUMPE MIT EINER FILTERANORDNUNG**

PUMP HAVING A FILTER ARRANGEMENT

POMPE À SYSTÈME DE FILTRES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **09.03.2009  DE 102009012347**

(43) Veröffentlichungstag der Anmeldung:
**18.01.2012  Patentblatt 2012/03**

(73) Patentinhaber: **Fraunhofer-Gesellschaft zur Förderung der angewandten Forschung e.V.
80686 München (DE)**

(72) Erfinder:
• **HERZ, Markus
80336 München (DE)**

• **RICHTER, Martin
81677 München (DE)**
• **SUTTER, Manuel
86159 Augsburg (DE)**

(74) Vertreter: **Stöckeler, Ferdinand
Patentanwälte SCHOPPE, ZIMMERMANN, STÖCKELER, ZINKLER & PARTNER
P.O. Box 246
82043 Pullach (DE)**

(56) Entgegenhaltungen:
**EP-A1- 1 873 532      WO-A2-02/43841
GB-A- 1 221 625      US-A- 3 523 408
US-A- 3 650 093      US-A- 4 004 587
US-A- 4 515 606      US-A- 4 636 307
US-A- 5 997 263**

**Beschreibung**

Die vorliegende Erfindung bezieht sich auf eine Pumpe mit einer Filteranordnung.

Im Zuge fortschreitender Miniaturisierung gewinnen Mikropumpen zunehmend an Bedeutung. Mikropumpen benötigen im praktischen Einsatz häufig einen Partikelfilter am Einlass der Mikropumpe, da ansonsten Partikel in der Pumpenkammer Leckraten an den Mikroventilen der Mikropumpe verursachen können oder der Partikel die Bewegung einer Pumpenmembran behindern könnte. Das kann letztendlich zum Ausfall der Pumpe führen.

Im Gegensatz zu Partikel sind die meisten Mikröpumpen heutzutage tolerant gegenüber Gasblasen (blasentolerant), so dass Gasblasen nicht separiert zu werden brauchen. Es können dabei verschiedene Gase in Frage kommen, wobei im einfachsten Fall Luftblasen vorkommen.

Filter, egal ob hydrophob (flüssigkeitsabweisend) oder hydrophil (flüssigkeitsanziehend) benötigen häufig einen hohen Druck, um eine Gasblase durch einen benetzten Filter führen zu können. Dies trifft insbesondere bei hydrophilen Filtern zu. Ein hoher Druck ist häufig ebenfalls erforderlich, um beispielsweise einen Flüssigkeitstropfen durch einen hydrophoben Filter zu führen. Der dazu erforderliche erhöhte Druck ist jedoch nachteilig hinsichtlich des Flusswiderstandes. Besonders für Mikropumpen sollte der Flusswiderstand daher durch den Filter möglichst wenig beeinflusst werden.

In der Mikrofluidik werden Flüssigkeiten durch Mikropumpen gepumpt und zur Vermeidung von Kontaminationen der Mikropumpe mit Partikeln werden vor dem Einlass der Mikropumpe meist hydrophile Filter verwendet. Wird jedoch eine Gasblase an den benetzten hydrophilen Filtern durch die Mikropumpe angesaugt, wird der Filter durch die Gasblase blockiert. Mikropumpen sind jedoch häufig nicht in der Lage, die hohen Saugleistungen zu erzeugen, die nötig wären, um die Luftblase durch den Filter zu saugen. Die erforderlichen Saugleistung (oder Saugdruck) kann beispielsweise bis zu einem Bar betragen. Als Konsequenz kann das System vollkommen ausfallen.

Es ist in der Mikrofluidik für den sehr häufigen Fall, dass nur kleine Systemdrücke auftreten (wie z. B. bei den so genannten Lab-on-Chip-Anwendungen, bei Mikropumpen etc.) ein generelles und fast prinzipielles Problem, dass einerseits die Verwendung von Partikelfiltern notwendig ist, andererseits aber Gasblasen diese Filter mit einem sehr hohen Druck blockieren können. Der sehr hohe Druck entsteht beispielsweise wegen der geringen Porengröße der verwendeten Filter und wird umso größer je kleiner die Partikel sind, die herausgefiltert werden sollen. Da Mikropumpen sehr klein sind, ist es wichtig auch sehr kleine Partikel herauszufiltern. Damit die kleinen Partikel jedoch herausgefiltert werden könne, sollte die Porengröße auch sehr klein sein, was wiederum den erforderlichen Druck erhöht, um beispielsweise Gasblasen durch den Filter zu drücken. Die verwendeten Mikropumpen können allerdings nur einen begrenzten Druck aufbringen, der häufig nicht ausreicht, um die Gasblasen durch die sehr kleinen Poren des Filters hindurchzudrücken.

Konventionelle Filter weisen einen hydrophoben und hydrophilen Bereich auf und sind aus dem Stand der Technik bereits bekannt. US 2003/0042211 offenbart beispielsweise einen bekannten Filter, bei dem eine serielle Anordnung von hydrophobem und hydrophilem Material ausgebildet ist, um Blasen wie auch Partikel aus einer Flüssigkeit zu separieren. Bekannt sind weiterhin Filter, bei denen Gasblasen mit hydrophobem Material aus dem Strömungspfad an die Umgebungsluft entfernt werden können. Nachteil dieser Systeme ist jedoch, dass beim Betrieb mit einer Mikropumpe an der Saugseite aus der Umgebung Luftblasen durch das hydrophobe Material in das System gesaugt werden können. Ein weiterer konventioneller Filter ist in US 5,997,263 beschrieben, um Blasen, die im Filter an bestimmten Stellen hängen geblieben sein können, zu entfernen bzw. zu vermeiden. Die beschriebene Filteranordnung ist jedoch ein eindimensionaler Filter und hat dementsprechend einen wesentlich höheren Flusswiderstand als ein zweidimensionaler flächiger Filter. Ferner sind bei diesem als Wall ausgebildeten eindimensionalen Filter entlang der Filterlinie unterschiedliche hydrophobe und hydrophile Bereiche ausgebildet, wobei jedoch der Kanaldeckel als Ganzes entweder hydrophob oder hydrophil ist. Das führt ebenfalls zu einer Erhöhung des Flusswiderstandes führen wird.

Weitere blasentolerante Partikelfilter sind in US 4278084 und in GB 1510072 beschrieben und dienen der künstlichen Ernährung. Bei beiden Filtern ist es jedoch erforderlich, sie derart zu orientieren, dass der hydrophobe Abschnitt vertikal über dem hydrophilen liegt, so dass aufsteigende Luftblasen sich infolge der Schwerkraft zu dem hydrophoben Abschnitt bewegen. Erst dort können die Luftblasen den hydrophoben Filter passieren. Die "richtige" Orientierung des Filters ist somit für die Funktionsweise des Filters unerlässlich. Insbesondere nach einer Drehung um 180° um ein horizontale Achse wird der Filter nicht bzw. deutlich schlechter funktionieren, da dies zu einer deutlichen Erhöhung des Flusswiderstandes führt.

Aus der US 3523408 A ist ein Gasbrenner bekannt, bei dem zwischen im Wesentlichen parallelen flüssigkeitsabweisenden und flüssigkeitsbenetzenden Filtermaterialien ein Abstand von 0,25 mm bis 5 mm vorgesehen ist.

Die US 5190524 A offenbart eine Vorrichtung zum Kombinieren einer Mehrzahl von Flüssigkeitsinfusionen um ein Gemisch zu bilden. Eine Kammer besitzt eine Mehrzahl von separat verschließbaren Einlässen und einen Auslass für das Gemisch. Eine hydrophile Membran und eine hydrophobe Membran sind in der Kammer vorgesehen.

Aus der US 5989318 A ist eine Vorrichtung zum Trennen von Wasser aus einem 2-Phasen-Strom bekannt, bei der in einem Hohlraum ein hydrophobes Filter vorgesehen ist, um Gas aus dem 2-Phasen-Strom zu entnehmen.

Ferner ist ein hydrophiles Filter vorgesehen, um zu verhindern, dass Wasser eine Wasserauslassöffnung verlässt.

In der US 4302223 A ist eine Luftentfernungsvorrichtung beschrieben, die ein Paar von beabstandeten Membranen aufweist, von denen eine hydrophob und die andere hydrophil ist. Eine Pumpe ist über eine Entgasungsvorrichtung mit dem Einlass der Luftbeseitigungsvorrichtung verbunden.

Die EP 0489403 A2 beschreibt eine Filtervorrichtung, die ein Gehäuse und ein mikroporöses Medium in der Form einer synthetischen polymeren mikroporösen Struktur aufweist.

Die DE 1949038 A beschreibt eine Trennvorrichtung für Gase und Flüssigkeiten, die ein Filterelement aufweist, das einen flüssigkeitsabweisenden Teil, der vor einem Auslass für ein Gas angeordnet ist, und einen anfeuchtbaren Teil, der vor einem Auslass für eine Flüssigkeit vorgesehen ist, aufweist.

Die US 7422565 B2 offenbart eine Fluidtrennvorrichtung für eine Infusionsleitung, die einen Aufnahmekörper und zumindest eine hydrophile Membran aufweist. Die hydrophile Membran ist in einem Fluiddurchlass vorgesehen, um nur Flüssigkeit durchzulassen.

Aus der als nächstliegender Stand der Technik angesehen EP 1873532 A1 ist eine elektroosmotische Pumpe bekannt, die ein Gasentlüftungsbauglied an einer Eingangsseite der elektroosmotischen Pumpe aufweist. Ein Flüssigkeitsansaugbauglied aus einem hydrophilen Material ist in Kontakt mit einer Einlasselektrode der elektroosmotischen Pumpe. Ein Entlüftungsbauglied aus einem porösen, beispielsweise hydrophoben Material ist das Flüssigkeitsansaugbauglied umgebend vorgesehen und dient dazu, Gas, das in der Nähe der Einlasselektrode erzeugt wird, zu entlüften.

Aus der US 4515606 ist ein Gastrennfilter bekannt, bei dem sich eine hydrophobe Filtermembran und eine hydrophile Filtermembran gegenüberliegen.

Aus der US 3650093 ist ein Medikamentenverabreichungssystem bekannt, bei dem eine Fiiteranordnung mit sich gegenüberliegenden hydrophoben und hydrophoben Membranen an der Auslassseite einer Spritze vorgesehen ist.

Ausgehend von diesem Stand der Technik stellt sich somit für die vorliegende Erfindung die Aufgabe, eine Pumpeanordnung bereitzustellen, die Partikel aus einem Medium mit Gasblasen filtert, ohne dass die Gasblasen zu einer Erhöhung des Strömungswiderstandes führen und zwar unabhängig von der Orientierung der Filteranordnung.

Diese Aufgabe wird durch eine Pumpenanordnung nach Anspruch 1 gelöst.

Eine erfindungsgemäße Pumpenanordnung weist eine Filteranordnung auf, die sowohl einen hydrophilen Membranfilter als auch einen hydrophoben Membranfilter aufweist und der Einströmweg des zu filternden Mediums wird aufgespalten in einen ersten Ausströmweg und einen zweiten Ausströmweg. Die Anordnung der hydrophoben und hydrophilen Membranfilter ist dabei dadurch gekennzeichnet, dass zumindest ein Abschnitt des hydrophoben Membranfilters und ein Abschnitt des hydrophilen Membranfilters mit einem Abstand von nicht mehr als 1 mm oder nicht mehr als 200 $\mu$m gegenüberliegen. Eine Gasblase, die sich mit dem in dem Einströmweg strömenden Medium bewegt, kommt somit während der Bewegung in Kontakt mit dem hydrophoben Membranfilter. Als Konsequenz kann die Gasblase den hydrophoben Membranfilter leicht passieren und es kommt dadurch nicht zu einem Stau von sich sammelnden Gasblasen vor einem Membranfilter.

Bei dieser Filteranordnung kann es somit unabhängig von der räumlichen Orientierung der Filteranordnung nicht dazu kommen, dass Gasblasen sich an einer Stelle des Filters sammeln und sich dort stauen (zur Ruhe kommen) und erst nach und nach durch den Filter gedrückt werden. Die Gasblasen kommen vielmehr während ihrer Bewegung in Kontakt mit dem hydrophoben Filterabschnitt und werden - ohne zu stoppen - durch den hydrophoben Filterabschnitt geleitet. Das Gegenüberliegen der Filterabschnitte kann dabei beispielsweise derart erreicht werden, dass die Filtermembranen flächenförmig ausgebildet sind und sich die hydrophoben und hydrophilen Abschnitte bezüglich ihrer Flächennormalen gegenüberliegen.

Durch den geringen Abstand der Abschnitte des hydrophoben und hydrophilen Membranfilters wird somit eine Filteranordnung bereitgestellt, die unabhängig von der Ausrichtung im Raum einen Partikelfilter schafft, der von Blasen leicht zu passieren ist, ohne dass sich der Flusswiderstand erhöht.

Der Grundidee der vorliegenden Erfindung folgend, wird somit ebenfalls ein Filterarrangement geschaffen, bei dem ein, zwei oder mehrere hydrophobe und hydrophile Filtermaterialien (Filterabschnitte) in Flussrichtung parallel angeordnet werden, wobei der geteilte Strömungspfad hinterher wieder zusammengeführt wird. Das Filterarrangement wird beispielsweise am Einlass (Saugseite) einer Pumpe angeordnet.

Bei weiteren Ausführungsbeispielen können beispielsweise die hydrophoben und hydrophilen Filterabschnitte flächenmäßig gegenüberliegend angeordnet sein, so dass der Maximalabstand von 1 mm sich auf alle Punkte der flächenmäßig angeordneten Filterabschnitte bezieht. Bei weiteren Ausführungsbeispielen können die flächenmäßig ausgebildeten hydrophoben und hydrophilen Membranfilter in Form eines Keiles an einer Seite spitz zusammenlaufen, so dass sich der Maximalabstand von 1 mm lediglich auf einen Teil des Keiles bezieht. Damit ist ebenfalls sichergestellt, dass Luftblasen, die sich in dem Medium befinden, mit zunehmendem Eindringen in den Keil, mit dem hydrophoben Membranfilter in Kontakt geraden und diesen dann leicht passieren können, ohne dass sie sich zunächst aufstauen.

Bei weiteren Ausführungsbeispielen kann anstatt des Keils der hydrophobe und hydrophile Membranfilter auch kegelförmig zueinander angeordnet werden. Die Kegelspitze des Kegels befindet sich stromabwärts, so dass die hydrophoben und hydrophilen Membranfilterabschnitte beispielsweise halbkreisförmig (in der Querschnittsebene senkrecht zur Flussrichtung) ausgebildet sind und jeweils einen Teil der Kegeloberfläche bilden. Auch bei diesem Ausführungsbeispiel bewegt sich eine Luftblase in Richtung der Kegelspitze in den Kegel hinein und kann während der Bewegung mit dem hydrophoben Membranfilter in Kontakt geraten. Spätestens an der Kegelspitze, an der beispielsweise der hydrophobe und der hydrophile Membranfilter zusammenlaufen - wobei sie sich nicht berühren brauchen - wird der Maximalabstand von 1 mm erreicht, so dass dann die Luftblase, ohne wiederum in ihrer Bewegung unterbrochen zu werden, mit dem hydrophoben Membranfilter in Kontakt gerät und diesen leicht passieren kann.

Bei weiteren Ausführungsbeispielen ist es ebenfalls möglich, dass mehrere hydrophobe und hydrophile Membranfilterabschnitte ausgebildet sind, wobei sich der Maximalabstand auf jeweils ein Paar gegenüberliegend angeordneter hydrophober und hydrophiler Membranfilterabschnitte bezieht. Wenn die Membranfilteranordnung eine Kegeloberfläche bildet, können hydrophobe und hydrophile Abschnitte beispielsweise streifenförmig ausgebildet sein. Die Luftblase gelangt dann während ihrer Bewegung mit dem Medium in Kontakt zu zumindest einem hydrophoben Filterabschnitt. Dabei ist es naheliegend, die hydrophoben und hydrophilen Filterabschnitte derart anzuordnen, dass unabhängig von der räumlichen Orientierung der Filteranordnung, eine Luftblase in Kontakt mit den hydrophoben Filterabschnitten gelangt (weitere Details sehe unten). Ausführungsbeispiele beziehen sich auf Pumpen, insbesondere Mikropumpen, die ihrerseits lediglich einen begrenzten Saugdruck erzeugen können, so dass die Filteranordnung in jedem Fall ein Aufstauen von Gasblasen verhindern soll und der Filter unabhängig von der Orientierung hinsichtlich der Schwerkraft einen nahezu konstanten Flusswiderstand aufweisen soll. Insbesondere wird bei Ausführungsbeispielen verhindert, dass aufsteigende Luftblasen in Folge der Schwerkraft in einen Filterabschnitt gelangen können, in welchem keine hydrophoben Bereiche ausgebildet sind. Ferner ist es vorteilhaft, dass in Folge der kleinen Abmessungen Kapillarkräfte ausgenutzt werden können, die die Flüssigkeit oder das Medium unabhängig von der Schwerkraft in den Filter hineinziehen können, so dass die Luftblase in Folge der Kapillarkräfte zu einem Abschnitt des hydrophoben Membranfilters geleitet wird. Vorteilhaft an Ausführungsbeispielen ist ebenfalls, dass die Pumpe keine Umgebungsluft ansaugt, da der geteilte Strömungspfad nach passieren der hydrophoben und hydrophilen Membranfilter sich hinterher wieder vereinigt und somit ein geschlossenes System aufweist.

Die Vorteile von Ausführungsbeispielen sind somit ein geringer Strömungswiderstand, der weitestgehend unabhängig von der räumlichen Orientierung ist. Darüber hinaus kann die Pumpe keine Umgebungsluft ansaugen, da sich der geteilte Strömungspfad nach dem Filtern wieder vereinigt. Gegebenenfalls vorhandene Blasen werden somit ohne merklichen Druckabfall durch das Filterarrangement geführt. Luftblasen werden nicht aus dem Medium entfernt, sondern können in dem Medium verbleiben.

Ausführungsbeispiele der vorliegenden Erfindung werden nachfolgend Bezug nehmend auf die beiliegenden Zeichnungen näher erläutert. Es zeigen:

Fig. 1a     eine schematische Darstellung eines blasentoleranten Filters für ein Ausführungsbeispiel der vorliegenden Erfindung;

Fig. 1b     eine rein schematische Darstellung einer Pumpe mit einem blasentoleranten Filter gemäß Fig. 1a

Fig. 2     eine Darstellung zur Veranschaulichung des Blockierdrucks und der Kapillarkräfte;

Fig.3     eine Querschnittsansicht durch eine Filteranordnung mit zueinander parallel angeordneten hydrophoben und hydrophilen Membranfiltern für ein Ausführungsbeispiel;

Fig. 4     eine Querschnittsansicht mit keilförmig ausgebildeten hydrophilen und hydrophoben Membranfiltem für weitere Ausführungsbeispiele;

Fig. 5     eine weitere schematische Darstellung für eine kegelförmig ausgebildete Filteranordnung; und

Fig. 6a     eine Filteranordnung mit mehreren hydrophoben und

und 6b     hydrophilen Membranfilterbereichen.

Bezüglich der nachfolgenden Beschreibung sollte beachtet werden, dass bei den unterschiedlichen Ausführungsbeispielen gleiche oder gleichwirkende Funktionselemente gleiche Bezugzeichen aufweisen und somit die Beschreibung dieser Funktionselemente in den verschiedenen Ausführungsbeispielen untereinander austauschbar sind.

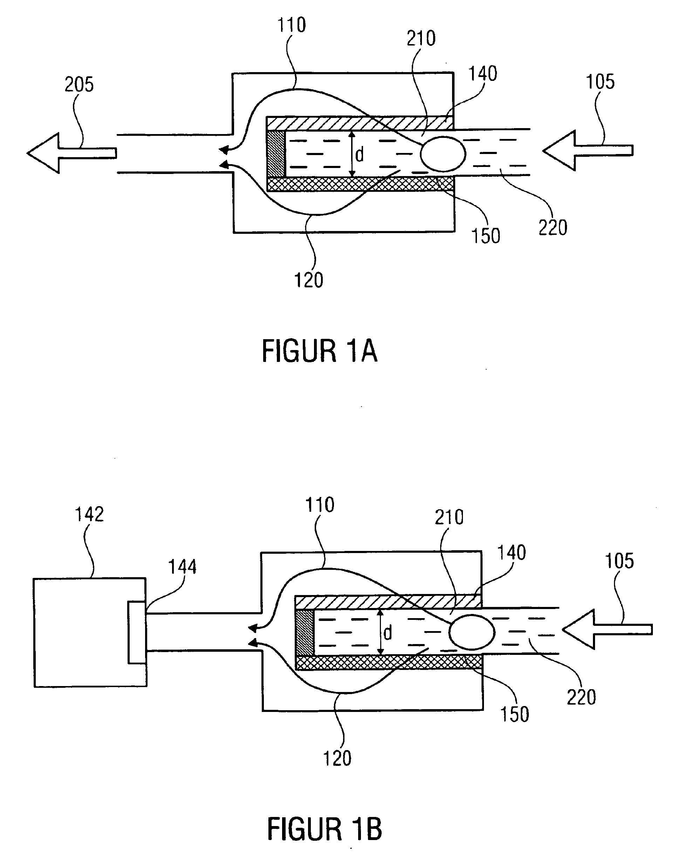

Fig. 1a zeigt eine schematische Darstellung für eine Filteranordnung für ein Ausführungsbeispiel der vorliegenden Erfindung. Die Filteranordnung weist einen Einströmweg 105, einen ersten Ausströmweg 110 und einen zweiten Ausströmweg 120 auf. Ferner weist die Filteranordnung einen hydrophoben Membranfilter 140 zwischen dem Einströmweg 105 und dem ersten Ausströmweg 110 und außerdem einen hydrophilen Membranfilter 150 zwischen dem Einströmweg 105 und dem zweiten Ausströmweg 120 auf. Die Membranfilteranordnung ist dadurch gekennzeichnet, dass sich zumindest ein Abschnitt des hydrophoben Membranfilters 140 und des hydrophilen Membranfilters 150 mit einem Abstand d von nicht mehr als 1 mm gegenüberliegen, so dass eine Gasblase 210, die sich mit einem in dem Einströmweg 105 strömenden Medium 220 bewegt, während der Bewegung in Kontakt mit dem hydrophoben Membranfilter 140 kommt. Eine eventuell vorhandene Gasblase 210 in dem einströmenden Medium 220 kann somit nicht die Filteranordnung blockieren. Die Gasblase 210 passiert während der Bewegung den hydrophoben Membranfilter 140. Beim Passieren des Mediums 220 mit der Luftblase 210 wird kein Blockierdruck messbar. Fig. 1b zeigt rein schematisch eine Pumpe 142 mit einer solchen Filteranordnung, wobei der erste Ausströmweg 110 und der zweite Ausströmweg 120 mit einer Saugseite 144 der Pumpe 142 verbunden sind.

Zum besseren Verständnis der Funktionsweise ist es zunächst sinnvoll einige Begriffe näher zu beschreiben.

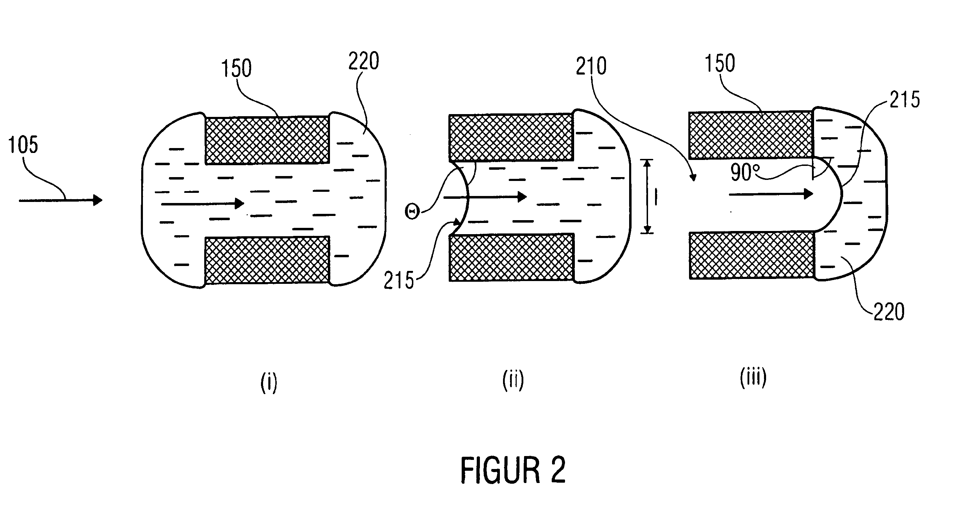

Fig. 2 gibt eine Veranschaulichung des Blockierdrucks und der wirkenden Kapillarkräfte. Es sind schematisch drei Phasen beim Passieren einer Luftblase durch einen hydrophilen Filter 150 gezeigt. In der ersten Phase (i) strömt zunächst das Medium 220 durch den hydrophilen Filter 150 ohne nennenswerten Blockierdruck. In der zweiten Phase (ii) kommt aus der Einströmrichtung 105 eine Gasblase 210, so dass sich eine freie Oberfläche 215 an dem Medium 210 bildet. Das Medium 220 benetzt die Oberfläche des Filters mit einem Benetzungswinkel θ, der kleiner ist als 90°.

Damit ist das Material oder zumindest die Oberfläche des hydrophilen Filters 150 benetzend (das Medium oder die Flüssigkeit wird daran "hochgezogen"). Wenn der Benetzungswinkel θ größer als 90° wäre, würde dies die Oberfläche als flüssigkeitsabweisend (hydrophob) klassifizieren. Wenn der Benetzungswinkel, wie in der Fig. 2 gezeigt, kleiner als 90° ist, wird das Medium von der Oberfläche des hydrophilen Filters 150 entlanggezogen, so dass eine Kraft erforderlich ist, um die Flüssigkeit dann aus der Spalte zu entfernen. Die erforderliche Kraft ist dabei nichts anderes als die Kapillarkraft, mit der die Flüssigkeit in den Spalt bzw. in die Pore hineingezogen wird.

In der dritten Phase (iii) ist die Luftblase 210 bereits teilweise durch den hydrophilen Filter 150 hindurch gedrückt, so dass die freie Oberfläche 215 am hinteren Ausgang (in Flussrichtung) des hydrophilen Filters 150 erscheint.

Die Messung des Blockierdruckes wird häufig mit der so genannte Bubble-Point-Methode oder dem Bubble-Point-Test durchgeführt. Dieser Test ist auch als Blasendrucktest oder als Blasenpunktmessung bekannt und wird zur Qualitätsprüfung von Membranen verwendet. Die Poren der Membran, die beispielsweise eine Durchlassöffnung von ca. 0,22 μm bilden (z.B. bei steriler Filtration), werden mit dem Medium befüllt. Das Medium kann beispielsweise Wasser aufweisen und die Befüllung kann am einfachsten mittels Durchspülens des Filtersystems mit einem Druck geschehen. Für den Test wird das Membrangehäuse je nach Bauart am besten von der Permeatseite (bei Hohlfasermodulen) langsam mit Druck beaufschlagt. Um das beispielhafte Wasser aus der Pore zu verdrängen, ist eine Kraft (Druckdifferenz der beiden Filterseiten) nötig. Diese Druckdifferenz ist vom Porendurchmesser 1 abhängig:

$$\Delta p \ = \ \frac{4\sigma * \cos\theta}{1} \ , \quad\quad\quad\quad (1)$$

wobei: $\Delta p$ = Druckdifferenz, $\sigma$ = Oberflächenspannung der Flüssigkeit (Wasser = 72,75 mN/m), $\theta$ = Benetzungswinkel, 1= Porendurchmesser.

Um den Blasenpunkt zu ermitteln, wird der Druck auf den Filter erhöht. Im selben Moment, in dem ein kontinuierlicher Luftblasenaustritt zu erkennen ist, wird der Druck am Manometer abgelesen. Da die Oberflächenspannung, Benetzungswinkel und Druckdifferenz bekannt sind, kann man durch Umstellen der Gleichung beispielsweise die Größe der größten Pore der Membran errechnen und somit ihre Qualität der Membran feststellen. Nach der physikalischen Definition ist eine Oberfläche mit einem Kontaktwinkel θ kleiner als 90° wie gesagt hydrophil (benetzend), bei einem Kontaktwinkel von größer als 90° hydrophob (unbenetzbar). Wenn also der Kontaktwinkel θ kleiner als 90° ist (cos θ > 0), ergibt sich eine positive Druckdifferenz ($\Delta p$ > 0).

Wenn beispielsweise eine runde Lochblende verwendet wird, wie sie beispielsweise in der Fig. 2 gezeigt ist und wenn sich freie Oberflächen infolge der Gasblase herausbilden, müssen Kapillarkräfte überwunden werden. Wird beispielsweise eine Lochblende mit einem Durchmesser D betrachtet, durch den dieser Meniskus bewegt werden soll, dann ist der minimale Krümmungsradius r des Meniskus gegeben als r = D/2 und unabhängig vom Benetzungswinkel eine Druckbarriere $\Delta p_b$ zu überwinden:

$$\Delta p_b \ = \ \frac{2\sigma_{wa}}{r} \ = \ \frac{4\sigma_{wa}}{D} \ . \quad\quad\quad\quad (2)$$

Bei einem Leitungsdurchmesser von beispielsweise D = 100 $\mu$m und der Oberflächenspannung Luft-Wasser von $\sigma_{wa}$ =0,075 N/m ist eine Druckbarriere $\Delta p_b$ = 30 hPa, bei D = 50 $\mu$m folgt $\Delta p_b$ = 60 hPa.

Bei einer Spaltblende gibt es nur eine Hauptkrümmungsebene und daher ist der Blockierdruck an einem Spalt der Höhe H genau halb so groß wieder Blockierdruck einer Lochblende mit einem Durchmesser D = H

$$\Delta p_b = \frac{\sigma_{wa}}{r} = \frac{2\sigma_{wa}}{H} . \qquad (3)$$

Bei einer Spalthöhe von beispielsweise H = 100 $\mu$m und der Oberflächenspannung von Luft-Wasser von $\sigma_{wa}$ = 0,075 N/m ist die Druckbarriere deshalb $\Delta p_b$ = 15 hPa, bei H = 25 $\mu$m folgt $\Delta p_b$ = 30 hPa. Saugdrücke von bis zu 50 hPa können aber von den meisten Mikropumpen problemlos erzeugt werden.

Bei dem Blockierdruck von Filtern entspricht der Blendendurchmesser der Porengröße. Bei 5 $\mu$m Porengröße ist der Blockierdruck gemäß der Gleichung (2) in etwa 600 hPa, bei kleineren Porendurchmessern noch darüber. Saugdrücke von dieser Größenordnung können von den üblichen Mikropumpen allerdings nicht mehr erzeugt werden. Deshalb ist es gerade bei Mikropumpen enorm wichtig Gasblasen effizient durch den Filter zu leiten.

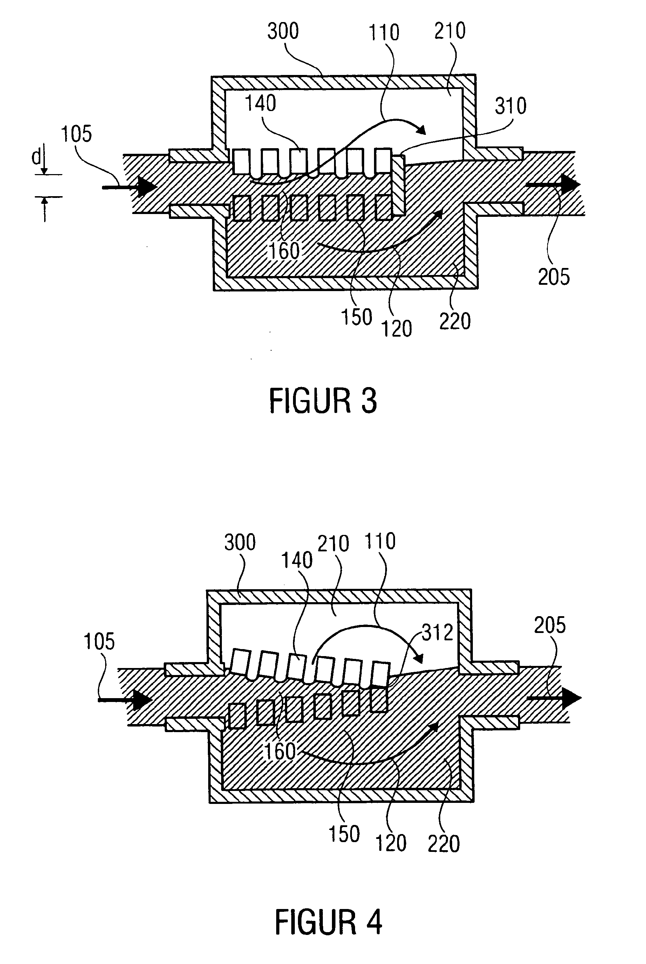

Fig. 3 zeigt ein Ausführungsbeispiel für eine Filteranordnung, die in einem Gehäuse 300 angeordnet ist. Das Gehäuse 300 weist dabei einen Eingang für den Einströmweg 105 auf und einen Ausgang für einen (gemeinsamen) Ausströmweg 205 auf. In dem Gehäuse 300 ist der hydrophile Membranfilter 150 und der hydrophobe Membranfilter 140 derart gegenüberliegend angeordnet, dass sich zwischen dem hydrophilen Membranfilter 150 und dem hydrophoben Membranfilter 140 ein Spalt 160 ausbildet. In dem gezeigten Ausführungsbeispiel können der hydrophile Membranfilter 150 und der hydrophobe Membranfilter 140 beispielsweise flächenförmig ausgebildet sein, so dass sich die beiden flächenförmig ausgebildeten Filter gegenüberliegen und der Spalt 160 somit im Wesentlichen eine konstante Spaltweite d (konstanten Abstand) aufweist. Am Ende des Spaltes 160 kann beispielsweise eine Abschlusswand 310 vorgesehen sein, die mit dem hydrophilen oder dem hydrophoben Membranfilter 150, 140 verbunden ist. Die Abschlusswand kann beispielsweise so ausgebildet sein, dass sich an der Abschlusswand 310 kein Stauraum/Sammelraum für Luftblasen 210 bilden kann.

Vorteilhafterweise ist die Spaltweite d derart bemessen, dass - abhängig vom Medium - Kapillarkräfte das Medium 220 in den Spalt hineinziehen und so den Flusswiderstand verringern.

Der Einströmweg 105 wird in der Filteranordnung in einen ersten Ausströmweg 110 und einen zweiten Ausströmweg 120 getrennt, die sich beide wieder zu einem gemeinsamen Ausströmweg 205 vereinen. Der erste Ausströmweg 110 passiert den hydrophoben Membranfilter 140 und der zweite Ausströmweg 120 passiert den hydrophilen Membranfilter 150. Wenn das Medium 220 durch den Einströmweg 105 in die Filteranordnung in dem Gehäuse 300 einströmt, wird das Medium 220 durch den hydrophilen Membranfilter 150 strömen, da der hydrophobe Membranfilter 140 einen höheren Strömungswiderstand für das Medium darstellt.

Während des Betriebes kann es nun dazu kommen, dass sich entlang des ersten Ausströmweges 110 im oberen Bereich des Gehäuses 300 (entgegengesetzt zur Schwerkraft) eine Gasblase 210 ausbildet, die beispielsweise Luft aufweisen kann. Wenn nun weitere Gasblasen über das Medium 220 durch den Einströmweg 105 in die Filteranordnung hineingelangen, werden die weiteren Gasblasen über den ersten Ausströmweg 110 in den oberen Teil des Gehäuses 300 gelangen. Gleichzeitig wird ein Teil der sich dort befindlichen Luft oder Gases durch den gemeinsamen Ausströmweg 205 das Gehäuse 300 wieder verlassen. Somit können Gasblasen in dem Medium 220 die Filteranordnung passieren, ohne dass es zu einem Stau von Gasblasen vor einem Filter kommt.

Fig. 4 zeigt ein weiteres Ausführungsbeispiel, bei dem der hydrophile Membranfilter 150 und der hydrophobe Membranfilter 140 beispielsweise wiederum flächenförmig angeordnet sind, wobei bei diesem Ausführungsbeispiel die beiden hydrophilen und hydrophoben Membranfilter 150, 140 keilförmig angeordnet sind. Somit laufen die hydrophilen und der hydrophobe Membranfilter in eine Spitze 312 zusammen, so dass stromabwärts in Richtung zur Spitze 312 der Abstand zwischen dem hydrophilen Membranfilter 150 und dem hydrophoben Membranfilter 140 kontinuierlich abnimmt. Auch bei diesem Ausführungsbeispiel wird ein Medium, welches über den Einströmweg 105 in das beispielhafte Gehäuse 300 gelangt, in einen ersten Ausströmweg 110 und einen zweiten Ausströmweg 120 aufgeteilt, die sich wiederum nach Passieren der Filter zu einem gemeinsamen Ausströmweg 205 vereinen. Entlang des ersten Ausströmweges 110 liegt der hydrophobe Membranfilter, so dass sich Luftblasen, die beispielsweise in dem Medium 220 vorhanden sein können, über den hydrophoben Membranfilter 140 bewegen. Gleichzeitig wird das Medium 220 entlang des zweiten Ausströmweges 120 über den hydrophilen Membranfilter 150 zu dem gemeinsamen Ausströmweg 205 gelangen.

Senkrecht zur Zeichenebene der Fig. 4 können sich der hydrophobe Membranfilter und der hydrophile Membranfilter 150, 140 flächenmäßig erstrecken, so dass sich die besagte keilförmige Anordnung ergibt. Dieses Ausführungsbeispiel hat den Vorteil, dass sich der Abstand zwischen dem hydrophilen und dem hydrophoben Membranfilter 150, 140 kontinuierlich verringert, so dass sich auch sehr kleine Abstände zwischen dem hydrophilen und dem hydrophoben Membranfilter 150 ,140 realisieren lassen. Durch die sehr kleinen Abstände können dann gleichzeitig auch sehr kleine Luftblasen während der Bewegung in Kontakt mit dem hydrophoben Membranfilter 140 treten - ohne dass es zu einem Staueffekt kommt. Bei Kontakt der Gasblasen mit dem hydrophoben Membranfilter 140 kann sich oberhalb eine große Gasblase 210 bilden. Beispielsweise ist es möglich, dass der Abstand d nimmt beispielsweise von einem Wert von ungefähr 600 $\mu$m kontinuierlich bis auf einen Wert von beispielsweise weniger als 10 $\mu$m ab.

Die erhaltene keilförmige Anordnung kann bei weiteren Ausführungsbeispielen ebenfalls mit der parallelen Anordnung, wie sie in der Fig. 3 gezeigt ist, kombiniert werden, so dass beispielsweise zunächst der hydrophile Membranfilter 150 und der hydrophobe Membranfilter 140 flächenförmig parallel (gegenüberliegend) angeordnet sind und sich stromabwärts keilförmig, wie es in der Fig. 4 gezeigt ist, aufeinander zulaufen.

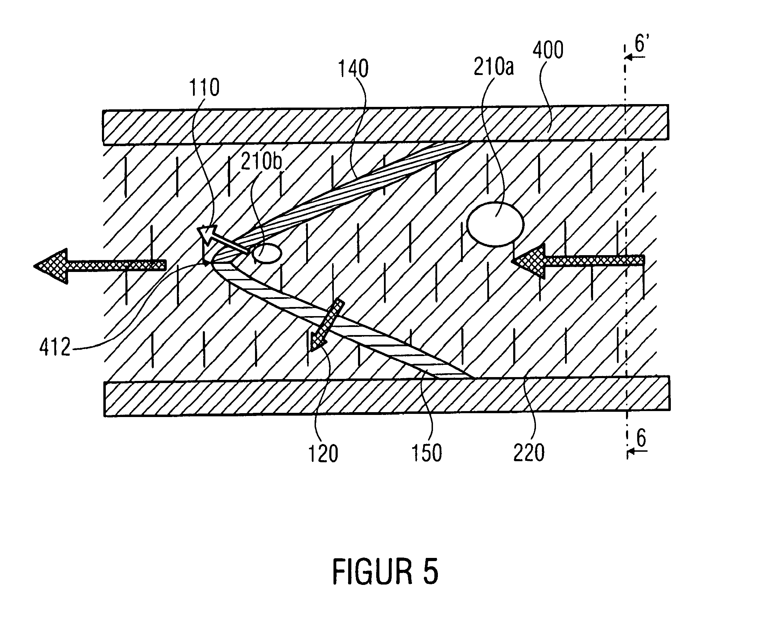

Fig. 5 zeigt ein weiteres Ausführungsbeispiel, bei dem der hydrophile Membranfilter 150 und der hydrophobe Membranfilter 140 einen Kegel mit einer Kegelspitze 412 bilden, wobei die Stromrichtung des Mediums 220 von rechts nach links ist und die Kegelspitze 412 stromabwärts liegt. Der hydrophobe Membranfilter 140 und der hydrophile Membranfilter 150 sind innerhalb einer äußeren Umhüllung 400 angeordnet and daran fixiert. Die Umhüllung kann beispielsweise zylinderförmig sein, so dass die Fig. 5 eine Querschnittsansicht entlang der Zylinderlängsachse darstellt. Der hydrophobe Membranfilter 140 ist bei diesem Ausführungsbeispiel vertikal oberhalb (entgegengesetzt zum Gravitationsfeld) angeordnet und der hydrophile Membranfilter 140 vertikal darunter angeordnet. Somit werden Luftblasen 210, die sich in dem Medium 220 befinden, stromabwärts in das Kegelinnere geleitet und kommen in Kontakt mit dem hydrophoben Membranfilter 140, den sie leicht über den ersten Ausströmweg 110 passieren können. Andererseits kann das Medium 220 den hydrophilen Membranfilter 150 in der vertikal darunter gelegenen Seite über den zweiten Ausströmweg 120 passieren.

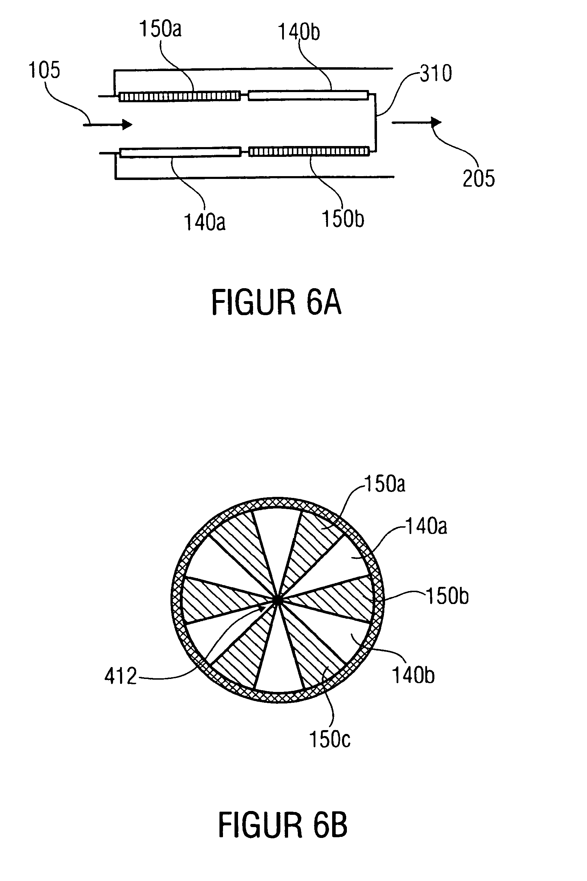

Aus der Fig. 5 ist ebenfalls ersichtlich, dass der Abstand zwischen dem hydrophilen Membranfilter 150 und hydrophoben Membranfilter 140 kontinuierlich stromabwärts hin zur Kegelspitze 412 abnimmt. Somit können auch selbst kleinste Luftblasen 210, die sich entlang des hydrophilen Membranfilters 150 stromabwärts bewegen, an der Kegelspitze 412 Kontakt zum hydrophoben Membranfilter 140 erlangen und diesen dort leicht passieren. Die Schnittlinie 6'-6 stellt die Querschnittslinie dar, auf die sich die Querschnittdarstellung in der Fig. 6b bezieht.

Das in der Fig. 5 gezeigte Ausführungsbeispiel kann auch dadurch noch erweitert oder verbessert werden, dass Filtermaterialien verwendet werden, die abschnittsweise hydrophob/hydrophil gemacht werden und dann zu einem Keil zusammenlaufen, so dass auch kleinste Blasen in keinem Kontakt zu der hydrophoben Membran kommen und so den Filter passieren können.

Fig. 6a und 6b zeigen weitere Ausführungsbeispiele, bei denen der hydrophile Membranfilter 150 und der hydrophobe Membranfilter 140 mehrere Abschnitte aufweisen, die beispielsweise abwechselnd oder alternierend zueinander angeordnet sind.

Die Fig. 6a zeigt beispielsweise eine weitere Ausgestaltungsform der Filteranordnung, wie sie in der Fig. 3 gezeigt ist, wobei bei dem in der Fig. 6a gezeigten Ausführungsbeispiel der hydrophobe Membranfilter einen ersten Teil 140a und einen zweiten Teil 140b aufweist und ebenfalls der hydrophile Membranfilter 150 einen ersten Teil 150a und einen zweiten Teil 150b aufweist. Entlang der Stromrichtung von dem Einströmweg 105 zu dem Ausströmweg 205 sind dabei nacheinander alternierend hydrophile und hydrophobe Teile in Stromrichtung angeordnet. Im Vergleich zu dem in der Fig. 3 gezeigten Ausführungsbeispiel sind somit der hydrophile Membranfilter 150 (in der Fig. 3) durch einen ersten Teil des hydrophoben Membranabschnittes 140a und einem zweiten Teil eines hydrophilen Membranabschnittes 150b, die sich in Stromrichtung hintereinander befinden, ersetzt. Gleichzeitig ist der in der Fig. 3 gezeigte hydrophobe Membranfilter 140 durch einen ersten hydrophilen Abschnitt 150a und einen zweiten hydrophoben Abschnitt 140b, die sich wiederum in Stromrichtung hintereinander befinden, ersetzt. Somit sind in Stromrichtung zunächst ein hydrophiler und ein hydrophober Abschnitt 140a, 150a parallel gegenüberliegend angeordnet und stromabwärts daran anschließend ein zweiter hydrophober Abschnitt 140b und ein zweiter hydrophiler Abschnitt 150b parallel gegenüber angeordnet. Die hydrophilen und hydrophoben Abschnitte 150a,b und 140a,b können beispielsweise wiederum flächenförmig ausgebildet sein, so dass sich die Flächen parallel gegenüberliegen.

Das in der Fig. 6a gezeigte Ausführungsbeispiel hat dann den Vorteil, dass auch für sehr kleine Luftblasen, die sich beispielsweise vertikal entlang des oberen Kanalbereiches ausbreiten, unabhängig von der Ausrichtung der Filteranordnung Kontakt zu einem hydrophoben Membranabschnitt 140 bekommen. Die Reihenfolge der Abschnitt kann jedoch auch getauscht werden, so dass zunächst ein hydrophiler Abschnitt 150 und dann ein hydrophober Abschnitt 140 ausgebildet ist - so lange immer ein hydrophober Abschnitt 140 von einem hydrophilen Abschnitt 150 gefolgt wird oder diesem vorausgeht.

Bei weiteren Ausführungsbeispielen ist es ebenfalls möglich, dass der stromabwärts gelegene zweite hydrophile und hydrophobe Abschnitt 140b, 150b keilförmig zueinander ausgebildet sind, wie es beispielsweise in der Fig. 4 gezeigt ist. Damit ist es möglich, dass wiederum die Abschlusswand 310 überflüssig wird, wenn der hydrophobe zweite Abschnitt 140b den hydrophilen zweiten Abschnitt 150b berührt oder mit ihm verbunden ist.

Bei weiteren Ausführungsbeispielen ist es somit ebenfalls möglich, die parallele Anordnung von hydrophilen und hydrophoben Membranbereichen 150, 140 zu kombinieren mit seriellen Anordnungen, d.h., dass die hydrophoben und hydrophilen Membranabschnitte 140 ,150 nicht parallel gegenüber angeordnet sind, sondern nebeneinander flächenförmig angeordnet sind, wie es beispielsweise in der Fig. 6a gezeigt ist.

Fig. 6b zeigt ein weiteres Ausführungsbeispiel für eine kegelförmige Ausgestaltung des hydrophilen und des hydrophoben Membranbereiches 150, 140 wie es in der Fig. 5 gezeigt wurde. Es ist eine Querschnittsansicht senkrecht zur Flussrichtung, beispielsweise aus der Richtung des Einströmweges 105, z.B. entlang der Schnittlinie 6-6' in der Fig. 5 genommen. Die Fig. 6b zeigt somit ein Ausführungsbeispiel, bei dem die Membranbereiche kegelförmig zusammengesetzt sind. Dabei weist die Filtermembran alternierend (z.B. in Uhrzeigersinn) einen hydrophilen und hydrophobe Abschnitte 150, 140 auf, wobei beispielsweise ein erster hydrophiler Membranbereich 150a von einem ersten hydrophoben Membranbereich 140a gefolgt wird und daran anschließend wieder ein zweiter hydrophober Membranbereich 150b von einem zweiten hydrophilen Membranbereich 140b gefolgt wird. Diese alternierende Anordnung setzt sich so lange fort, bis die gesamte Kegeloberfläche streifenförmig, wie in der Fig. 6b gezeigt ist, von hydrophilen und hydrophoben Membranbereichen 150, 140 gebildet wird. Die hydrophilen und die hydrophoben Membranbereiche 150, 140 laufen dabei alle bis zur Kegelspitze 412 zu, wo alle zusammentreffen oder miteinander verbunden werden.

Eine sich stromabwärts bewegende Luftblase 210 gelangt somit immer während ihrer Bewegung in Kontakt mit einem hydrophoben Membranbereich 140. Bei größeren Luftblasen, erfolgt die Kontaktierung mit dem hydrophoben Kanalbereich im Allgemeinen bereits früher als für sehr kleine Luftblasen, bei denen es vorkommen kann, dass sie sich bis hin zur Spitze des Kegels 412 bewegen, um erst dort Kontakt mit einem hydrophoben Membranabschnitt 140 zu bekommen. Damit weist auch dieses Ausführungsbeispiel den Vorteil auf, dass die Luftblasen 210 entlang ihrer Bewegung unabhängig davon, wie die Schwerkraft wirkt, früher oder später Kontakt mit einem hydrophoben Membranabschnitt 140 gelangen und diesen dann leicht passieren können. Damit kommt es nicht zu dem besagten Aufstaueffekt, bei dem sich in Abhängigkeit der Orientierung oder Ausrichtung des Filters relativ zur Schwerkraft Luftblasen an bestimmten Orten des Filters sammeln können und dort den Filter blockieren, so dass der Flusswiderstand erhöht wird. Die Filteranordnung aus der Fig. 6b umfasst mehrere parallel hydrophile oder hydrophobe angeordnete Filtersegmente.

Bei weiteren Ausführungsbeispielen ist es ebenfalls möglich, für den hydrophilen und hydrophoben 150, 140 Filtermembranen zwei verschiedene Membranmaterialien einzusetzen als auch verschiedene Porengrößen zu verwenden. Beispielsweise ist die Verwendung von zwei Membranen mit gleicher oder unterschiedlicher Porenweite möglich, so dass sich durch eine feinere Porenweite für den Luftfilter der Luft-Bypass effektiv freihalten lässt, da der Bubble Point von Hydrophobizität und von der Porengröße abhängt.

Der hydrophile und der hydrophobe Membranfilter 140, 150 kann beispielsweise auch durch eine Oberflächenbehandlung eines gleichförmig ausgebildeten Membranfilters gebildet werden. Während der Oberflächenbehandlung kann beispielsweise der Filter über eine Oberflächenbeschichtung entweder hydrophob oder hydrophil gestaltet werden - je nachdem mit welchem Material die Oberfläche behandelt wird. Zunehmend werden Beschichtungstechnologien entwickelt, bei denen Materialien wie beispielsweise Silizium, Kunststofffolien, Metallfolien etc. strukturiert, hydrophob oder hydrophil erzeugt werden können. Damit kann zunächst die Membran als Ganzes erst ausgebildet werden und anschließend werden bestimmte Abschnitte der Membran hydrophob oder hydrophil beschichtet, was selektiv für bestimmte Abschnitte geschehen kann. Sogenannte Bubble Point freie Filter können daher direkt in eine Mikropumpe integriert werden, indem am Einlass der Mikropumpe ein Filterelement mit teilweise hydrophober und hydrophiler Beschichtung montiert wird.

Blasentolerante Partikelfilter gemäß Ausführungsbeispielen können auch wie folgt zusammengefasst werden. Die Membranen sind parallel zur Flussrichtung ausgelegt - beispielsweise gegenüberliegend. Dabei ist die Anordnung der Membran derart, dass die Funktion vollständig lageunabhängig ist, so dass auch beispielsweise bei Drehungen um 180° um eine horizontale Achse der Filter immer noch genauso funktioniert. Die hydrophile Membran 140 kann wie ein Schwamm wirken und Wasser aufsaugen. Die Spaltdicke (Abstand) d kann beispielsweise derart gewählt sein, dass sie so groß ist wie die kleinste vorkommende Gasblase 210, wobei die Membranen auch aufeinander liegen können. Alternativ kann der Abstand d derart gewählt sein, dass zumindest 80 % der vorkommenden Gasblasen einen größeren Durchmesser aufweisen als der Abstand d. Die Membranen können auch keilförmig oder taschenförmig oder trichterförmig angeordnet sein, wobei die keilförmige Anordnung ebenfalls sicherstellt, dass die kleinste Gasblase 210 in Kontakt zu dem hydrophoben Membranbereich 140 bekommt. Durch die Abmessung des Spaltes 160 oder des Kanals können ferner Kapillarkräfte genutzt werden, um den Flusswiderstand weiter zu mindern. Generell ist ein sehr niedriger Druckabfall bei Ausführungsbeispielen vorhanden, die daher für mikrofluidische Zwecke sehr gut geeignet sind (z.B. für Mikropumpen).

Damit vermeiden Ausführungsbeispiele nicht nur, dass Luftblasen an bestimmten Stellen des Kanals sich sammeln können, sondern dass gleichzeitig auch kleine Teilchen sich an hydrophoben Stellen ablagern können, die die Blasen-tolerante Funktion des Filters einschränken könnten oder sogar verhindern würden. Damit lassen sich die Nachteile von konventionellen Lösungen vermeiden, bei denen eine Drehung um 180° um eine horizontalen Drehachse zu einem Blockieren des Filters führt und zwar genau dann, wenn sich die hydrophile Membran oben befindet und sich daher Luft oben ansammelt und kein Wasser mehr durchgelassen werden kann.

Bei Ausführungsbeispielen kann der Abstand d derart gewählt werden, dass er auf jedem Fall kleiner ist als der Durchmesser der vorkommenden Blase oder der kleinsten vorkommenden Blase. Beispielsweise kann der Abstand d auch ca. 200 µm, oder ungefähr 100 µm oder in einem Bereich unterhalb von 100 µm liegen. Die keil- oder kegelförmig angeordnete Membrankonfiguration, wie sie in der Fig. 4 und Fig. 5 gezeigt sind, können beispielsweise einen Winkel an der Spitze 312, 412 aufweisen, der von der hydrophoben Membran 140 und der hydrophilen Membran 150 aufgespannt wird und in einem Bereich liegt zwischen 5 und 50° oder aber zumindest kleiner ist als 180°. Die Porengröße kann dabei flexibel eingestellt werden, wobei beispielsweise Poren in der Größenordnung von 0,2 µm liegen können oder aber auch die Poren eine Größe aufweisen können, die zwischen 0,1 µm ... 20 µm oder zwischen 5 µm und 10 µm liegt.

Ausführungsbeispiele umfassen ebenfalls ein Filterarrangement, bei dem eine Strömungsverzweigung durch ein Filterelement mit je einem hydrophoben und hydrophilen Abschnitt realisiert wird und die nach der Verzweigung wieder zusammengeführt werden. Bei weiteren Ausführungsbeispielen ist das Filtermaterial der hydrophilen Abschnitte gegenüber dem Filtermaterial der hydrophoben Abschnitte liegt, so dass sich ein enger Fluidspalt zwischen beiden Membranfiltern ergibt.

Bei weiteren Ausführungsbeispielen kann der hydrophobe und hydrophile Filter gegenüber mit einem engen Spalt 160 dazwischen liegen, wobei ein hohes Aspektverhältnis des Spaltes 160 Kapillarkräfte sicherstellt, so dass im Spalt 160 vor dem hydrophilen Filter 150 nur Flüssigkeit verbleibt und nach dem Durchtritt der Gasblase 210 durch den hydrophoben Filter 140 keine Luftbläschen mehr vor dem hydrophilen Filter 150 sind.

Somit werden zwei (oder mehrere) Filtermaterialien mit unterschiedlichen Kontaktwinkeln parallel angeordnet, wobei der eine Filter gegenüber der zu fördernden Flüssigkeit benetzend ist (und daher beim Befüllen nur einen geringen Befülldruck aufweist), während das andere Filtermaterial gegenüber der Flüssigkeit einen größeren Befülldruck aufweist und nicht benetzt (also im zweiten Filter Luft verbleibt). Der Strömungspfad teilt sich vor den Filtern und vereinigt sich dahinter. Tritt nun eine Luftblase ein, so nimmt diese den Weg durch den zweiten hydrophoben Filter, ohne dass hier ein Blockierdruck messbar wird.

Da die Filteranordnung tolerant gegenüber Gasblasen ist, so dass diese den Filter (z.B. am Eingang einer Mikropumpe) ohne oder ohne nennenswerten Widerstand passieren können, sollte die Filteranordnung keine direkte Öffnung zur Umgebung aufweisen, um ein Ansaugen von Umgebungsluft zu vermeiden. Die Filteranordnung sollte demnach von der Umgebungsluft geschlossen sein.

Ausführungsbeispiele der Erfindung schaffen somit eine Pumpe mit einem blasentoleranten Partikelfilter, das an einer Saugseite der Pumpe angeordnet ist. Bei Ausführungsbeispielen der vorliegenden Erfindung ist die Pumpe eine Mikropumpe. Ausführungsbeispiele der Erfindung beziehen sich allgemein auf Pumpen, die einen Filter mit kleiner Porengröße haben. Ausführungsbeispiele beziehen sich auf Zahnradpumpen, die einen Partikelfilter aufweisen, um ein Blockieren der Pumpe durch Partikel zu verhindern. Allgemein beziehen sich Ausführungsbeispiele der Erfindung auf Pumpen, die Strukturen haben, die durch Partikel blockiert oder verstopft werden können und somit ein Filter benötigen.

## Patentansprüche

1. Pumpenanordnung, mit:

   einer Pumpe zum Pumpen eines Mediums von einer Saugseite zu einer Druckseite, mit:

   einer Filteranordnung mit folgenden Merkmalen:

      einem Einströmweg (105), einem ersten Ausströmweg (110) und einem zweiten Ausströmweg (120);
      einem hydrophoben Membranfilter (140) zwischen dem Einströmweg (105) und dem ersten Ausströmweg (110);
      einem hydrophilen Membranfilter (150) zwischen dem Einströmweg (105) und dem zweiten Ausströmweg (120),
      **dadurch gekennzeichnet, dass** zumindest ein Abschnitt des hydrophoben Membranfilters (140) und des hydrophilen Membranfilters (150) mit einem Abstand (d) zwischen denselben gegenüberliegen, wobei der Abstand nicht mehr als 1 mm beträgt, so dass eine Gasblase (210), die sich mit einem in dem Einströmweg (105) strömenden Medium (220) in einen Zwischenraum zwischen dem hydrophoben Membranfilter und dem hydrophilen Membranfilter bewegt, während der Bewegung in Kontakt mit dem hydrophoben Membranfilter (140) kommt,
      und dass der erste und zweite Ausströmweg (110, 120) der

   Filteranordnung mit der Saugseite der Pumpe verbunden sind, so dass die Gasblase (210) durch die Filteranordnung geführt wird.

**2.** Pumpenanordnung nach Anspruch 1, bei der die Pumpe eine Mikromembranpumpe aufweist.

**3.** Pumpenanordnung nach Anspruch 1 oder 2, bei der der hydrophobe Membranfilter (140) und der hydrophile Membranfilter (150) parallel, flächenformig gegenüberliegend zueinander angeordnet sind.

**4.** Pumpenanordnung nach Anspruch 1 oder 2, bei der der hydrophobe Membranfilter (140) und der hydrophile Membranfilter (150) einen sich in Strämungsrichtung verjüngenden Keil bilden.

**5.** Pumpenanordnung nach Anspruch 1 oder 2, bei der das hydrophobe Membranfilter (140) und das hydrophile Membranfilters (150) einen sich in Strömungsrichtung verjüngenden Kegel bilden.

**6.** Pumpenanordnung nach einem der vorhergehenden Ansprüche, wobei stromabwärts des Mediums (220) mehrere gegenüberliegend angeordnete Abschnitte des hydrophoben und hydrophilen Membranfilter (140, 150) ausgebildet sind, so dass stromabwärts des Mediums (220) hydrophobe und hydrophile Abschnitte (140, 150) einander abwechseln.

**7.** Pumpenanordnung nach einem der vorhergehenden Ansprüche, wobei stromabwärts der hydrophobe und der hydrophile Membranfilter (140, 150) von einer geraden Abschlusswand (310) voneinander getrennt sind, so (dass sich an der Abschlusswand (310) kein Stauraum für Luftblasen (210) bildet.

**8.** Pumpenanordnung nach einem der vorhergehenden Ansprüche, bei der der hydrophile Membranfilter (150) und der hydrophobe Membranfilter (140) ein gemeinsames Membransubstrat aufweisen, wobei der hydrophile Membranfilter (150) und der hydrophobe Membranfilter (140) eine unterschiedliche Oberflächenbeschichtung des Membransubstrats aufweisen.

**9.** Pumpenanordnung nach einem der vorhergehenden Ansprüche, bei der ein Material des hydrophoben Membranfilters (140) für ein zu pumpendes Medium einen Kontaktwinkel von mehr als 100° und ein Material des hydrophilen Membranfilters (150) für ein zu pumpendes Medium einen Kontaktwinkel von weniger als 80° aufweist.

**Claims**

**1.** Pump arrangement, comprising:

a pump for pumping a medium from a suction side to a pressure side, comprising:

a filter arrangement comprising:

an inflow path (105), a first outflow path (110) and a second outflow path (120);
a hydrophobic membrane filter (140) located between the inflow path (105) and the first outflow path (110);
a hydrophilic membrane filter (150) located between the inflow path (105) and the second outflow path (120);

**characterized in that** at least one section of the hydrophobic membrane filter (140) and of the hydrophilic membrane filter (150) are mutually opposed at a distance (d) between them, said distance amounting to no more than 1 mm, so that a gas bubble (210) which moves into a space located between the hydrophobic membrane filter and the hydrophilic membrane filter along with a medium (220) flowing in the inflow path (105) comes into contact with the hydrophobic membrane filter (140) during the movement, and that the first and second outflow paths (110, 120) of the filter arrangement are connected to the suction side of the pump, so that the gas bubble (210) is guided through the filter arrangement.

**2.** Pump arrangement as claimed in claim 1, wherein the pump comprises a micro membrane pump.

**3.** Pump arrangement as claimed in claims 1 or 2, wherein the hydrophobic membrane filter (140) and the hydrophilic membrane filter (150) are arranged in parallel and mutually opposed in a planar manner.

**4.** Pump arrangement as claimed in claims 1 or 2, wherein the hydrophobic membrane filter (140) and the hydrophilic membrane filter (150) form a wedge tapering in the flow direction.

5. Pump arrangement as claimed in claims 1 or 2, wherein the hydrophobic membrane filter (140) and the hydrophilic membrane filter (150) form a cone tapering in the flow direction.

6. Pump arrangement as claimed in any of the previous claims, wherein several oppositely arranged sections of the hydrophobic and hydrophilic membrane filters (140, 150) are configured downstream from the medium (220) so that downstream from the medium (220), hydrophobic and hydrophilic sections (140, 150) alternate.

7. Pump arrangement as claimed in any of the previous claims, wherein in the downstream direction, the hydrophobic and hydrophilic membrane filters (140, 150) are separated from each other by a straight termination wall (310), so that no build-up space for air bubbles (210) will form at the termination wall (310).

8. Pump arrangement as claimed in any of the previous claims, wherein the hydrophilic membrane filter (150) and the hydrophobic membrane filter (140) comprise a common membrane substrate, the hydrophilic membrane filter (150) and the hydrophobic membrane filter (140) having different surface coatings of the membrane substrate.

9. Pump arrangement as claimed in any of the previous claims, wherein a material of the hydrophobic membrane filter (140) has a contact angle of more than 100° for a medium to be pumped, and wherein a material of the hydrophilic membrane filter (150) has a contact angle of less than 80° for a medium to be pumped.

**Revendications**

1. Aménagement de pompe, avec:

   une pompe destinée à pomper un fluide d'un côté de succion vers un côté de refoulement, avec:

   un système de filtres aux caractéristiques suivantes:

   un trajet d'entrée (105), un premier trajet de sortie (110) et un deuxième trajet de sortie (120);
   un filtre à membrane hydrophobe (140) entre le trajet d'entrée (105) et le premier trajet de sortie (110);
   un filtre à membrane hydrophile (150) entre le trajet d'entrée (105) et le deuxième trajet de sortie (120),

   **caractérisé par le fait qu'**au moins un segment du filtre à membrane hydrophobe (140) et du filtre à membrane hydrophile (150) sont opposés à une distance (d) entre eux, la distance n'étant pas supérieure à 1 mm, de sorte qu'une bulle de gaz (210) qui se déplace avec un fluide (220) circulant dans le trajet d'entrée (105) dans un espace intermédiaire entre le filtre à membrane hydrophobe et le filtre à membrane hydrophile entre, pendant le déplacement, en contact avec le filtre à membrane hydrophobe (140), et que les premier et le deuxième trajets de sortie (110, 120) du système de filtres sont reliés au côté de succion de la pompe, de sorte que la bulle de gaz (210) soit guidée par l'aménagement de filtres.

2. Aménagement de pompe selon la revendication 1, dans lequel la pompe présente une pompe à micro-membrane.

3. Aménagement de pompe selon la revendication 1 ou 2, dans lequel le filtre à membrane hydrophobe (140) et le filtre à membrane hydrophile (150) sont disposés parallèles, opposés à plat l'un à l'autre.

4. Aménagement de pompe selon la revendication 1 ou 2, dans lequel le filtre à membrane hydrophobe (140) et le filtre à membrane hydrophile (150) constituent un coin s'effilant dans la direction de l'écoulement.

5. Aménagement de pompe selon la revendication 1 ou 2, dans lequel le filtre à membrane hydrophobe (140) et le filtre à membrane hydrophile (150) forment un cône s'effilant dans la direction de l'écoulement.

6. Aménagement de pompe selon l'une des revendications précédentes, dans lequel sont formés, en aval du fluide (220), plusieurs segments disposés opposés du filtre à membrane hydrophobe et du filtre à membrane hydrophile (140, 150), de sorte qu'en aval du fluide (220) s'alternent des segments hydrophobes et hydrophiles (140, 150).

7. Aménagement de pompe selon l'une des revendications précédentes, dans lequel le filtre à membrane hydrophobe et le filtre à membrane hydrophile (140, 150) sont séparés d'une paroi droite de finition (310) en aval l'un de l'autre, de sorte qu'à la paroi de finition (310) ne se forme pas d'espace d'accumulation de bulles d'air (210).

8. Aménagement de pompe selon l'une des revendications précédentes, dans lequel le filtre à membrane hydrophile (150) et le filtre à membrane hydrophobe (140) présentent un substrat à membrane commun, le filtre à membrane hydrophile (150) et le filtre à membrane hydrophobe (140) présentant un revêtement superficiel différent du substrat à membrane.

9. Aménagement de pompe selon l'une des revendications précédentes, dans lequel un matériau du filtre à membrane contact de plus de 100° et un matériau du filtre à membrane hydrophile (150) présente pour un fluide à pomper un angle de contact de moins de 80°.

**FIGUR 1A**

**FIGUR 1B**

(i)          (ii)          (iii)

**FIGUR 2**

EP 2 406 495 B1

FIGUR 3

FIGUR 4

FIGUR 5

EP 2 406 495 B1

**FIGUR 6A**

**FIGUR 6B**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030042211 A
- US 5997263 A
- US 4278084 A
- GB 1510072 A
- US 3523408 A
- US 5190524 A
- US 5989318 A
- US 4302223 A
- EP 0489403 A2
- DE 1949038 A
- US 7422565 B2
- EP 1873532 A1
- US 4515606 A
- US 3650093 A